# EUROPÄISCHE PATENTSCHRIFT

(11) **EP 0 320 833 B1**
(45) Veröffentlichungstag und Bekanntmachung des Hinweises auf die Patenterteilung: **15.09.1993**
(21) Anmeldenummer: 88120686.6
(22) Anmeldetag: 10.12.1988
(51) Int. Cl.: B29C 33/62

(54) **Wässriges Trennmittel zur Herstellung von Polyurethan-Formkörpern**
Aqueous release agent for producing moulded polyurethane articles
Agent de démoulage aqueux pour la fabrication de corps moulés en polyuréthane

(30) Priorität: 14.12.1987 DE 3742370; 14.12.1987 DE 3742368
(43) Veröffentlichungstag der Anmeldung: 21.06.1989
(73) Patentinhaber: KLÜBER CHEMIE KG, D-82212 Maisach (DE)
(72) Erfinder: Makus, Zdzislaw, Dr., D-8182 Bad Wiessee (DE)
(74) Vertreter: Steffens, Joachim, Dr.

(56) Entgegenhaltungen:
- EP-A- 0 018 528
- DE-A- 2 807 450
- US-A- 4 217 394
- PATENT ABSTRACTS OF JAPAN, Band 7, Nr. 69 (C-158)[1214], 23. März 1983;& JP-A-58 007 422 (HARIMA KASEI KOGYO K.K.) 17-01-1983
- PATENT ABSTRACTS OF JAPAN, Band 11, Nr. 381 (C-464)[2828], 12. Dezember 1987;& JP-A-62 149 794 (MIYOSHI OIL & FATCO., LTD) 03-07-1987

## Beschreibung

Es ist bekannt, daß Polyurethane gegenüber anderen Werkstoffen eine starke Adhäsion zeigen, was zu einer breiten Anwendung von Polyurethansystemen auf dem Klebstoffsektor geführt hat. Diese klebende Wirkung macht sich jedoch bei der Herstellung von Polyurethan-Formkörpern, egal ob geschäumt oder ungeschäumt, sehr nachteilig bemerkbar. Es ist daher notwendig, bei der Herstellung solcher Formkörper Trennmittel einzusetzen, die auf die Wandungen der Form, mit denen die Polyurethansysteme in Berührung kommen, aufgebracht werden. Meist werden Trennmittel aus Wachs-, Seifen und/oder Ölbasis mit Druckluft (airless-Pistolen) in die geöffnete Form eingesprüht, wobei es weniger auf die Menge des Trennmittels als auf einem gleichmäßigen Auftrag ankommt. Dies muß nach jeder Entformung wiederholt werden.

Im Gegensatz zu früher, als man ausschließlich mit lösungsmittelhaltigen Trennmitteln gearbeitet hat, versucht man heute anstelle der lösungsmittelhaltigen Trennmittel - zwecks Umweltschonung - Trennmittel auf wässriger Basis einzusetzen, beispielsweise solche, die als Trennmittelkomponente höhermolekulare Kohlenwasserstoffe enthalten. Beispiele hierfür sind wässrige Dispersionen von Polyethylenwachsen oder wässrige Emulsionen von Paraffinen, wobei die Wachse vom Fachmann je nach gewünschtem Einsatzzweck ausgewählt werden.

Grundsätzlich hat es sich jedoch bei der Anwendung dieser wässrigen Trennmittel als nachteilig erwiesen, insbesondere bei Anwendung in Verbindung mit der Herstellung von Polyurethan-Weichschaumstoffen, daß die Oberflächen der entformten Formkörper noch zu großporig sind. Außerdem ist es beim Einsatz dieser wässrigen Trennmittel unbedingt notwendig, die Formwandungen nach jeder Entformung neu einzusprühen. Wird dies nicht getan, wird die Oberfläche des Formkörpers beim Herausnehmen so beschädigt, daß der Formkörper nicht mehr brauchbar ist und verworfen werden muß. Dies gilt ebenfalls insbesondere für Polyurethan-Weichschaumstoffe.

Aufgabe der vorliegenden Erfindung ist es daher, ein wässriges Trennmittel zur Herstellung von Polyurethan-Formkörpern, insbesondere von Polyurethan-Weichschaumformkörpern, zur Verfügung zu stellen, mit dem einerseits die Eigenschaften der Oberfläche der Polyurethan-Formkörper verbessert werden und die andererseits eine verbesserte Trennwirkung aufweisen, die selbst dann noch zum Tragen kommt, wenn mal vergessen wird, die Formwandungen nach der Entformung einzusprühen, so daß man in einem solchen Falle trotzdem einen Formkörper erhält, dessen Oberfläche bei der Entformung nicht beschädigt wird.

Gelöst wird diese Aufgabe gemäß der vorliegenden Erfindung durch ein wässriges Trennmittel gemäß Patentanspruch 1.

Zweckmäßige Weiterbildungen der Erfindung gemäß Anspruch 1 ergeben sich aus den abhängigen Ansprüchen 2 bis 11.

Die erfindungsgemäß eingesetzten ungesättigten Kohlenwasserstoffe können Homo- oder Copolymerisate bzw. Blockcopolymerisate sein. Sie können fest, quellbar, flüssig oder fließfähig sein. Vorzugsweise sind sie jedoch bei Raumtemperatur oder zumindest aber unter den Verarbeitungsbedingungen flüssig oder fließfähig. Sie enthalten vorzugsweise die Doppelbindungen nicht in konjugierter Form, so daß zu den erfindungsgemäß besonders bevorzugten ungesättigten Kohlenwasserstoffen solche gehören, die Oligomere oder Polymere von Isopren und/oder Butadien sind und die gegebenenfalls noch mit anderen damit polymerisierbaren Monomeren copolymerisiert oder blockcopolymerisiert sein können. Sie können außerdem zusätzlich noch funktionelle Gruppen, insbesondere Sauerstoff und/oder Stickstoff enthaltende Gruppen sowie solche Gruppen aufweisen, die nach Zerewitinoff aktive Wasserstoffatome enthalten.

Ein erfindungsgemäß besonders bevorzugt eingesetzter ungesättigter Kohlenwasserstoff ist ein flüssiges Polybutadien, das ein Molekulargewicht von ca. 3.000 und eine Jodzahl von ca. 450 aufweist.

Das erfindungsgemäße Trennmittel enthält die ungesättigten Kohlenwasserstoffe vorzugsweise in einer Menge von 0,5 bis 50 Gew.-%, insbesondere in einer Menge von 1 bis 40 Gew.-%, bezogen auf das Gesamtgewicht des Trennmittels. Die für das jeweilige Polyurethan-System am besten geeigneten Mengen an ungesättigten Kohlenwasserstoffen werden in der üblichen Weise, die dem Fachmann geläufig ist, experimentell ermittelt, so daß die Mengen z.B. auch 3 bis 50 Gew.-% bzw. 5 bis 50 Gew.-% betragen können.

Als Emulgatoren werden die üblichen Emulgatoren in den üblichen Mengen eingesetzt.

Als Schaumstabilisatoren werden die für die jeweiligen Polyurethanschaumstoff-Systeme üblichen Schaumstabilisatoren eingesetzt. Zu den erfindungsgemäß bevorzugt eingesetzten Schaumstabilisatoren gehören Polysiloxan-Polyether-Copolymerisate unterschiedlichen Aufbaus, wie sie beispielsweise im Kunststoff-Handbuch "Polyurethane" Becker/Braun, Hanser-Verlag/München und in der US-A-28 34 748, US-A-29 17 480, US-A-36 29 308 sowie in der DE-A-25 58 523 beschrieben sind.

Im übrigen können die erfindungsgemäßen wässrigen Trennmittel in Trennmitteln gebräuchliche Zusätze enthalten, wie z.B. Biozide, Aminverbindungen, quaternäre Ammoniumverbindungen, oberflächenmodifizierende Substanzen (Bentonite) u.a.

Die nachfolgenden Beispiele erläutern die Erfindung, ohne sie jedoch darauf einzuschränken.

### Beispiel 1

Ein wässriges Trennmittel, das bei der Herstellung von Polyurethan-Weichschaumformkörpern Anwendung findet, hat folgende Zusammensetzung:
20 Gew.-% flüssiges Butadien (M ca. 3.000; Jodzahl ca. 450)
4 Gew.-% ethoxylierter Fettalkohol 8-EO (Emulgator)
76 Gew.-% Wasser

### Beispiel 2

Ein weiteres wässriges Trennmittel, das bei der Herstellung von Polyurethan-Hartschaumformkörpern Anwendung findet, hat folgende Zusammensetzung:
10 Gew.-% flüssiges Butadien (M ca. 3.000; Jodzahl ca. 450)
10 Gew.-% Mikrowachs (F: 70°C)
4 Gew.-% Emulgator: Mulsifam RT 231 = Kombination von Alkylaryl- und Alkylpolyglykolethern (Handelsprodukt der Fa. Zschimmer & Schwarz)
76 Gew.-% Wasser

### Beispiel 3

Ein wässriges Trennmittel, das bei der Herstellung von Polyurethan-Weichschaumformkörpern Anwendung findet, hat folgende Zusammensetzung:
20 Gew.-% flüssiges Butadien (M ca. 3.000; Jodzahl ca. 450)
4 Gew.-% ethoxylierter Fettalkohol 8-EO (Emulgator)
2 Gew.-% Schaumstabilisator DC-190 (Handelsprodukt der Fa. Dow Corning)
74 Gew.-% Wasser

### Beispiel 4

Ein weiteres wässriges Trennmittel, das bei der Herstellung von Polyurethan-Hartschaumformkörpern Anwendung findet, hat folgende Zusammensetzung:
10 Gew.-% flüssiges Butadien (M ca. 3.000; Jodzahl 450)
10 Gew.-% Mikrowachs (F: 70°C)
4 Gew.-% Emulgator: Mulsifam RT 231 = Kombination von Alkylaryl- und Alkylpolyglykolethern (Handelsprodukt der Fa. Zschimmer & Schwarz)
2 Gew.-% Schaumstabilisator DC-190 (Handelsprodukt der Fa. Dow Corning)
74 Gew.-% Wasser

## Patentansprüche

1. Wässriges Trennmittel zur Herstellung von Polyurethan-Formkörpern, insbesondere von Polyurethan-Weichschaumformkörpern, bestehend im wesentlichen aus Wasser, trennwirksamen Substanzen und Emulgatoren, dadurch gekennzeichnet, daß es als trennwirksame Substanz zumindest zum Teil einen oder mehrere ungesättigte oligomere oder polymere Kohlenwasserstoffe mit Molekulargewichten von mindestens 500 und Jodzahlen von mindestens 60 enthält.

2. Wässriges Trennmittel nach Anspruch 1, dadurch gekennzeichnet, daß es in Kombination mit dem oligomeren oder polymeren Kohlenwasserstoff bzw. den oligomeren oder polymeren Kohlenwasserstoffen einen oder mehrere für Polyurethansysteme geeignete Schaumstabilisatoren enthält.

3. Wässriges Trennmittel nach Anspruch 1 oder 2, dadurch gekennzeichnet, daß die ungesättigten Kohlenwasserstoffe ein Molekulargewicht von 1.000 bis 10.000 aufweisen.

4. Wässriges Trennmittel nach Anspruch 1 bis 3, dadurch gekennzeichnet, daß die ungesättigten Kohlenwasserstoffe eine Jodzahl von 150 bis 600 aufweisen.

5. Wässriges Trennmittel nach Anspruch 1 bis 4, dadurch gekennzeichnet, daß die ungesättigten Kohlenwasserstoffe bei Raumtemperatur oder unter den Verarbeitungsbedingungen flüssig oder fließfähig sind.

6. Wässriges Trennmittel nach Anspruch 1 bis 5, dadurch gekennzeichnet, daß die ungesättigten Kohlenwasserstoffe Homo- oder Copolymerisate bzw. Blockcopolymerisate sind.

7. Wässriges Trennmittel nach Anspruch 1 bis 6, dadurch gekennzeichnet, daß die ungesättigten Kohlenwasserstoffe zusätzlich funktionelle Gruppen, insbesondere Sauerstoff und/oder Stickstoff enthaltende Gruppen sowie solche Gruppen aufweisen, die nach Zerewitinoff aktive Wasserstoffatome enthalten.

8. Wässriges Trennmittel nach Anspruch 1 bis 7, dadurch gekennzeichnet, daß die ungesättigten Kohlenwasserstoffe Oligomere oder Polymere von Isopren und/oder Butadien sind, die gegebenenfalls noch mit anderen damit polymerisierbaren Monomeren copolymerisiert oder blockcopolymerisiert sein können.

9. Wässriges Trennmittel nach Anspruch 1 bis 8, dadurch gekennzeichnet, daß es die ungesättigten Kohlenwasserstoffe in einer Menge von 0,5 bis 50 Gew.-% insbesondere in einer Menge von 1 bis 40 Gew.-%, bezogen auf das Gesamtgewicht des Trennmittels, enthält.

10. Wässriges Trennmittel nach Anspruch 1 bis 9, dadurch gekennzeichnet, daß es die Schaumstabilisatoren in einer Menge von 0,2 bis 6 Gew.-%, vorzugsweise von 0,5 bis 3 Gew.-%, bezogen auf das Gesamtgewicht des Trennmittels, enthält.

11. Verwendung der wässrigen Trennmittel gemäß Anspruch 1 bis 10 zur Herstellung von Polyurethan-Formkörpern, insbesondere von Polyurethan-Weichschaum-Formkörpern.

## Claims

1. An aqueous mold release agent for the production of molded polyurethane articles, especially molded soft foam articles, consisting substantially of water, substances effecting mold release, and emulsifiers, characterized in that as substance effecting mold release it contains at least a portion of one or more unsaturated oligomeric or polymeric hydrocarbons having molecular weights of at least 500 and iodine numbers of at least 60.

2. Aqueous mold release agent according to claim 1, characterized in that in combination with the oligomeric or polymeric hydrocarbon or hydrocarbons it contains one or more foam stabililizers suitable for polyurethane systems.

3. Aqueous mold release agent according to claim 1 or 2, characterized in that the unsaturated hydrocarbons have a molecular weight of 1000 to 10 000.

4. Aqueous mold release agent according to claims 1 to 3, characterized in that the unsaturated hydrocarbons have an iodine value of 150 to 600.

5. Aqueous mold release agent according to claims 1 to 4, characterized in that the unsaturated hydrocarbons are liquid or flowable at room temperature or under the processing conditions.

6. Aqueous mold release agent according to claims 1 to 5, characterized in that the unsaturated hydrocarbons are homopolymers or copolymers or block copolymers, respectively.

7. Aqueous mold release agent according to claims 1 to 6, characterized in that the unsaturated hydrocarbons additionally contain functional groups, especially groups containing oxygen and/or nitrogen, and groups containing active hydrogen atoms according to Zerewitinoff.

8. Aqueous mold release agent according to claims 1 to 7, characterized in that the unsaturated hydrocarbons are oligomers or polymers of isoprene and/or butadiene which may optionally be copolymerized or block copolymerized with other monomers polymerizable or block copolymerizable therewith.

9. Aqueous mold release agent according to claims 1 to 8, characterized in that it contains the unsaturated hydrocarbons in an amount from 0,5 to 50% by weight, especially in an amount of 1 to 40% by weight, based on the total weight of mold release agent.

10. An aqueous mold release agent according to claims 1 to 9, characterized in that it contains the foam stabilizers in an amount of 0.2 to 6% by weight, preferably 0.5 to 3% by weight, based on the total weight of the release agent.

11. The use of the aqueous mold release agents according to claims 1 to 10 for the production of molded polyurethane articles, especially of polyurethane soft foam articles.

## Revendications

1. Agent de séparation aqueux pour la fabrication de solides moulés en polyuréthanne, en particulier de solides moulés de mousse légère en polyuréthanne, formé essentiellement d'eau, de substances actives à la séparation et d'agent d'émulsion, caractérisé en ce qu'il contient comme substance active à la séparation, au moins en partie, un ou plusieurs hydrocarbures oligomères ou polymères, non saturés ayant des poids moléculaires d'au moins 500 et des indices d'iode d'au moins 60.

2. Agent de séparation aqueux selon la revendication 1, caractérisé en ce qu'il contient en combinaison avec l'hydrocarbure oligomère ou polymère ou avec des hydrocarbures oligomères ou polymères, un ou plusieurs agents de stabilisation de la mousse, appropriés pour des systèmes de polyuréthanne.

3. Agent de séparation aqueux selon la revendication 1 ou 2, caractérisé en ce que les hydrocarbures non saturés présentent un poids moléculaire de 1 000 à 10 000.

4. Agent de séparation aqueux selon les revendications 1 à 3, caractérisé en ce que les hydrocarbures non saturés présentent un indice d'iode de 150 à 600.

5. Agent de séparation aqueux selon les revendications 1 à 4, caractérisé en ce que les hydrocarbures non saturés sont liquides ou aptes à l'écoulement à température ambiante ou dans les conditions de préparation.

6. Agent de séparation aqueux selon les revendications 1 à 5, caractérisé en ce que les hydrocarbures non saturés sont des homo- ou copolymères ou des copolymères en blocs.

7. Agent de séparation aqueux selon les revendications 1 à 6, caractérisé en ce que les hydrocarbures non saturés présentent en supplément des groupes fonctionnels, en particulier des groupes renfermant de l'oxygène et/ou de l'azote ainsi que des groupes tels que ceux qui renferment des atomes d'hydrogène actifs selon la méthode de Zerewitinoff.

8. Agent de séparation aqueux selon les revendications 1 à 7, caractérisé en ce que les hydrocarbures non saturés sont des oligomères ou des polymères de l'isoprène et/ou du butadiène, qui peuvent être le cas échéant copolymérisés ou copolymérisés en blocs encore avec d'autres monomères qui peuvent être polymérisés avec ceux-ci.

9. Agent de séparation aqueux selon les revendications 1 à 8, caractérisé en ce qu'il renferme les hydrocarbures non saturés en quantités allant de 0,5 à 50 % en poids, en particulier en quantités allant de 1 à 40 % en poids, rapporté au poids total de l'agent de séparation.

10. Agent de séparation aqueux selon les revendications 1 à 9, caractérisé en ce qu'il renferme des agents de stabilisation de mousse en quantités allant de 0,2 à 6 % en poids, de préférence de 0,5 à 3 % en poids rapporté au poids total de l'agent de séparation.

11. Utilisation des agents de séparation aqueux selon les revendications 1 à 10, pour l'obtention de solides moulés en polyuréthanne, en particulier de solides moulés de mousse légère en polyuréthanne.
